(19) Europäisches Patentamt
European Patent Office
Office européen des brevets

(11) **EP 4 212 595 A1**

(12) **EUROPEAN PATENT APPLICATION**
published in accordance with Art. 153(4) EPC

(43) Date of publication:
**19.07.2023 Bulletin 2023/29**

(21) Application number: **21866686.5**

(22) Date of filing: **03.09.2021**

(51) International Patent Classification (IPC):
**C09D 5/00** (2006.01)        **C09D 123/26** (2006.01)
**C09D 133/06** (2006.01)        **C09D 133/14** (2006.01)
**C09D 7/20** (2018.01)

(52) Cooperative Patent Classification (CPC):
**C09D 5/00; C09D 7/20; C09D 123/26;
C09D 133/06; C09D 133/14**

(86) International application number:
**PCT/JP2021/032542**

(87) International publication number:
**WO 2022/054727 (17.03.2022 Gazette 2022/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.09.2020 JP 2020153934**

(71) Applicant: TOYOBO CO., LTD.
**Osaka-shi
Osaka 5300001 (JP)**

(72) Inventors:
• **YAMASAKI, Hokuto**
  **Takasago-shi, Hyogo 676-0082 (JP)**
• **KASHIHARA, Kenji**
  **Takasago-shi, Hyogo 676-0082 (JP)**

(74) Representative: **Vossius & Partner
Patentanwälte Rechtsanwälte mbB
Siebertstraße 3
81675 München (DE)**

(54) **POLYOLEFIN-BASED COATING COMPOSITION**

(57)    This invention provides a paint formulation that is used as a primer of a polypropylene substrate for automotive exterior parts etc., that has better chemical resistance and high-pressure car washing resistance than in the past, and that has good storage stability of the paint. Specifically, provided is a paint formulation comprising a modified polyolefin (A) having a glass transition temperature of -30°C or more and a (meth)acrylic resin (B) having a glass transition temperature of 0°C or more, and having a hydroxy value of 5 to 100 mgKOH/g or an acid value of 0 to 30 mgKOH/g, wherein a (meth)acrylic acid ester monomer constituting the (meth)acrylic resin comprises at least one member selected from methyl (meth)acrylate, ethyl (meth)acrylate, cyclohexyl (meth)acrylate, 2-ethylhexyl (meth)acrylate, and an OH group-containing (meth)acrylate.

EP 4 212 595 A1

**Description**

Technical Field

The present invention relates to a paint formulation having good paint storage stability, adhesion to a polyolefin substrate, chemical resistance, and weather resistance.

Background Art

Polyolefin resins are relatively inexpensive and have a variety of excellent characteristics, including chemical resistance and water resistance. Polyolefin resins are thus used in a wide range of fields as a material for, for example, automotive parts, electrical parts, building materials, and food packaging films. In particular, in the automotive field, weight reduction has been promoted from the viewpoint of improving fuel efficiency, and the amount of polyolefin resins used has tended to increase. Since polyolefin components are nonpolar substrates and have low adhesion, primers obtained by using a modified polyolefin having excellent adhesion are particularly used for automotive exterior parts. In recent years, the endurance time required for chemical resistance has become longer than in the past, and there has been a growing demand for high-pressure washing resistance to avoid peeling of a paint film even at higher temperatures and higher pressure than in the past. To meet these requirements, various proposals have been made.

For example, Patent Literature (PTL) 1 and PTL 2 disclose a paint formulation comprising a modified polyolefin obtained by grafting with an acrylic resin. However, polyolefins obtained by graft-modification with an acrylic resin have deteriorated paint film performance, such as chemical resistance; thus, the paint film performance is not considered sufficient.

Citation List

Patent Literature

PTL 1: JP Patent No. 6528064

PTL 2: JP2002-332448

Summary of Invention

Technical Problem

An object of the present invention is to provide a paint formulation that is used as a primer of a polypropylene substrate for automotive exterior parts etc., that has better chemical resistance and high-pressure car washing resistance than in the past, and that has good paint storage stability.

Solution to Problem

The present inventors conducted extensive research to solve the above problems and consequently found that the above problems can be solved by using a modified polyolefin resin having specific resin characteristics and an acrylic resin having specific resin characteristics. The present invention has thus been accomplished.

More specifically, the present invention encompasses the following embodiments.

Item 1. A paint formulation comprising

a modified polyolefin (A) having a glass transition temperature of -30°C or more and
a (meth)acrylic resin (B) having a glass transition temperature of 0°C or more, and having a hydroxy value of 5 to 100 mgKOH/g or an acid value of 0 to 30 mgKOH/g,
wherein a (meth)acrylic acid ester monomer constituting the (meth)acrylic resin comprises at least one member selected from methyl (meth)acrylate, ethyl (meth)acrylate, cyclohexyl (meth)acrylate, 2-ethylhexyl (meth)acrylate, and an OH group-containing (meth)acrylate.

Item 2. The paint formulation according to Item 1, wherein the (meth)acrylic resin (B) is present in an amount of 25 to 900 parts by mass per 100 parts by mass of the modified polyolefin (A).

Item 3. The paint formulation according to Item 1 or 2, wherein the modified polyolefin (A) has an acid value of 5 to 40 mgKOH/g-resin.

Item 4. The paint formulation according to any one of Items 1 to 3, wherein the modified polyolefin (A) has a weight average molecular weight of 20,000 to 180,000.

Item 5. The paint formulation according to any one of Items 1 to 4, comprising a hydrocarbon-based solvent (C), wherein the hydrocarbon-based solvent (C) is present in an amount of 200 to 3000 parts by mass per 100 parts by mass of the modified polyolefin (A).

Item 6. The paint formulation according to any one of Items 1 to 5, comprising at least an ester-based solvent (D1) or a ketone-based solvent (D2), or both of them.

Item 7. The paint formulation according to any one of Items 1 to 6, further comprising an alcohol-based solvent (E).

Item 8. A primer paint for a polyolefin substrate, comprising the paint formulation of any one of Items 1 to 7.

Advantageous Effects of Invention

The present invention can provide a paint formulation that has good storage stability and that is capable of forming a paint film having excellent chemical resistance and excellent adhesion in terms of, for example, high-pressure washing resistance.

Description of Embodiments

Embodiments of the present invention are described in detail below.

Modified Polyolefin (A)

The modified polyolefin (A) for use in the present invention is preferably, but is not particularly limited to, an acid-modified polyolefin (A1) or an acid-modified chlorinated polyolefin (A2). These can also be used in combination.

In the present invention, the acid-modified polyolefin (A1) is preferably acid-modified with at least one of an $\alpha$-olefin polymer or copolymer, and is more preferably one obtained by grafting at least one of polyethylene, polypropylene, and a propylene-$\alpha$-olefin copolymer with at least one of an $\alpha,\beta$-unsaturated carboxylic acid and an acid anhydride thereof.

Examples of $\alpha$-olefins include those having two or more carbon atoms. Specific examples include ethylene, propylene, 1-butene, 2-methyl-1-propene, 2-methyl-1-butene, 3-methyl-1-butene, 1-hexene, 2-ethyl-1-butene, 2,3-dimethyl-1-butene, 2-methyl-1-pentene, 3-methyl-1-pentene, 4-methyl-1-pentene, 3,3-dimethyl-1-butene, 1-heptene, methyl-1-hexene, dimethyl-1-pentene, ethyl-1-pentene, trimethyl-1-butene, methylethyl-1-butene, 1-octene, methyl-1-pentene, ethyl-1-hexene, dimethyl-1-hexene, propyl-1-heptene, methylethyl-1-heptene, trimethyl-1-pentene, propyl-1-pentene, diethyl-1-butene, 1-nonen, 1-decene, 1-undecene, and 1-dodecene. One or two or more of these $\alpha$-olefins can be polymerized to obtain an $\alpha$-olefin polymer or copolymer.

The propylene-$\alpha$-olefin copolymer mainly comprises propylene that is copolymerized with an $\alpha$-olefin. Examples of $\alpha$-olefins include ethylene, 1-butene, 1-heptene, 1-octene, 4-methyl-1-pentene, vinyl acetate, and the like, which can be used alone or in a combination of two or more. Preferred among these $\alpha$-olefins are ethylene and 1-butene. Although the proportion of the propylene component and the $\alpha$-olefin component in the propylene-$\alpha$-olefin copolymer is not limited, the amount of propylene component is preferably 50 mol% or more, and more preferably 70 mol% or more. Even when the amount of ethylene component in the propylene-$\alpha$-olefin copolymer is 50 mol% or less, the paint formulation of the present invention shows good adhesion, chemical resistance, and paint storage stability. Further, even when the amount of ethylene component is 30 mol% or less, the paint formulation of the present invention shows sufficient adhesion, chemical resistance, and paint storage stability (paint stability). An amount of ethylene component of 9 mol% or less also poses no problem.

The acid-modification of the acid-modified polyolefin (A1) is preferably polymerization of an acid functional group. The acid functional group for use may be at least one of an $\alpha,\beta$-unsaturated carboxylic acid and a derivative thereof. The derivatives of $\alpha,\beta$-unsaturated carboxylic acids are preferably acid anhydrides. Examples of at least one of an $\alpha,\beta$-unsaturated carboxylic acid and an acid anhydride thereof include maleic acid, itaconic acid, citraconic acid, and acid anhydrides thereof. Among these, an acid anhydride is preferred, and maleic acid anhydride is more preferred. Specific examples include acid-modified polypropylene, acid-modified propylene-ethylene copolymers, acid-modified propylene-butene copolymers, acid-modified propylene-ethylene-butene copolymers, and the like. These acid-modified polyolefins can be used alone or in a combination of two or more.

The weight average molecular weight (Mw) of the acid-modified polyolefin (A1) is preferably within the range of 20,000 to 180,000, more preferably 40,000 to 150,000, and even more preferably 60,000 to 120,000. When the weight average molecular weight (Mw) is 20,000 or more, good chemical resistance is obtained. In contrast, when the weight average molecular weight (Mw) is 180,000 or less, good paint storage stability is obtained.

From the viewpoint of adhesion to the polyolefin resin substrate, the acid value of the acid-modified polyolefin (A1) is preferably within the range of 5 to 40 mgKOH/g-resin, and more preferably 10 to 30 mgKOH/g-resin. When the acid value is 5 mgKOH/g-resin or more, good paint storage stability is obtained. In contrast, when the acid value is 40 mgKOH/g-resin or less, excellent chemical resistance is obtained.

The melting point (Tm) of the acid-modified polyolefin (A1) is preferably 40°C or more, more preferably 50°C or more, and even more preferably 60°C or more. When the melting point is 40°C or more, good adhesion and chemical resistance are obtained. The melting point is preferably 120°C or less, more preferably 100°C or less, and even more preferably 90°C or less. When the melting point is 120°C or less, good paint storage stability is obtained.

The method for producing the acid-modified polyolefin (A1) is not particularly limited. Examples of the method include a radical grafting reaction in which a radical species is formed in a polymer serving as a main chain, and unsaturated carboxylic acid and acid anhydride are graft-polymerized using the radical species as a polymerization starting point.

Examples of radical generators include, but are not limited to, organic peroxides, such as di-tert-butyl peroxyphthalate, tert-butyl hydroperoxide, dicumyl peroxide, benzoyl peroxide, tert-butyl peroxybenzoate, tert-butyl peroxy-2-ethylhexanoate, tert-butyl peroxypivalate, methyl ethyl ketone peroxide, di-tert-butyl peroxide, and lauroyl peroxide; azonitriles, such as azobisisobutyronitrile and azobisisopropionitrile; and the like. Of these, organic peroxides are preferably used.

The acid-modified chlorinated polyolefin (A2) is not limited and is preferably obtained by chlorination of the acid-modified polyolefin (A1).

The chlorine content of the acid-modified chlorinated polyolefin (A2) is preferably 5 to 40 mass%, more preferably 10 to 30 mass%, and even more preferably 15 to 25 mass%. When the chlorine content is less than 5 mass%, solution stability can be low, and when the chlorine content is 40 mass% or more, adhesion can be reduced.

The method for producing the acid-modified chlorinated polyolefin (A2) is not particularly limited. For example, the acid-modified chlorinated polyolefin (A2) can be obtained by dissolving the acid-modified polyolefin (A1) in a halogenated hydrocarbon, such as chloroform, and introducing chlorine.

The glass transition temperature (hereinafter "Tg") of the acid-modified polyolefin (A1) and the acid-modified chlorinated polyolefin (A2), which are modified polyolefins (A), is -30°C or more, preferably -25°C or more, and more preferably -20°C or more. When the Tg is -30°C or more, the paint film is less likely to be affected by heating during a water resistance test, a high-pressure washing test, etc., and degradation of physical properties of the paint film can be suppressed, achieving good high-pressure washing resistance.

(Meth)acrylic Resin (B)

The Tg of a (meth)acrylic resin (B) is 0°C or more, preferably 10°C or more, and more preferably 20°C or more. The Tg is preferably 150°C or less, and more preferably 100°C or less. A lower Tg value is preferred in the film-forming process; however, an overly low Tg value can deteriorate the physical properties when the paint film is heated. On the other hand, a Tg value of 150°C or more can affect film-forming properties or make crosslinking reactions less likely to occur, possibly resulting in deterioration of physical properties of the paint film.

The Tg of the (meth)acrylic resin (B) can be calculated by using the formula for calculating the theoretical Tg of a (meth)acrylic acid ester copolymer (FOX formula).

$$1/Tg = C1/Tg1 + C2/Tg2 + . . . + Cn/Tgn \text{ (FOX formula)}$$

(In this calculation formula (FOX formula), Tg represents the theoretical Tg of a (meth)acrylic acid ester copolymer, Cn represents the weight percentage of monomer n in the monomer mixture of a (meth)acrylic acid ester copolymer (B), Tgn represents the Tg of the homopolymer of monomer n, and n represents the number of monomers constituting the (meth)acrylic acid ester copolymer (B), and is a positive integer.)

The Tg values disclosed in literature may be used for the Tg values of the homopolymers of the (meth)acrylic acid ester monomers and the polar-group-containing monomer. Examples of such literature include the (Meth)acrylic acid ester catalogue from Kyoeisha Chemical Co., Ltd.; the Acrylic ester catalog from Mitsubishi Chemical Corporation; and Shin kobunshi bunko 7, toryo you gousei jushi nyuumon [New Polymer 7, Introduction to Synthetic Resins for Paints], Kyoso Kitaoka, published by Polymer Publication Society, 1997, pp. 168-169.

The weight average molecular weight (Mw) of the (meth)acrylic resin (B) is preferably 1,000 or more, more preferably 5,000 or more, and even more preferably 10,000 or more. The weight average molecular weight (Mw) of the (meth)acrylic resin (B) is preferably 100,000 or less, and more preferably 50,000 or less. When the weight average molecular weight is 1,000 or more, the paint has good adhesion. On the other hand, when the weight average molecular weight is 100,000 or less, the paint tends to have good paint storage stability.

The (meth)acrylic resin (B) has a hydroxy value of 5 to 100 mgKOH/g or an acid value of 0 to 30 mgKOH/g. The hydroxy value is preferably 10 to 90 mgKOH/g, and more preferably 20 to 80 mgKOH/g. When the hydroxy value is less than 5 mgKOH/g, crosslinking reaction does not sufficiently occur, and adhesion can be reduced. On the other hand, when the hydroxy value exceeds 100 mgKOH/g, crosslinking reaction proceeds, and the storage stability of the paint can be deteriorated.

The acid value of the (meth)acrylic resin (B) is preferably 2 to 20 mgKOH/g, and more preferably 3 to 15 mgKOH/g. When the acid value exceeds 30 mgKOH/g, the paint stability can be deteriorated.

The hydroxy value of the (meth)acrylic resin (B) represents a value on a solid content basis and is evaluated according to the pyridine-chloroacetylation method of JIS K 0070-1992. The acid value of the (meth)acrylic resin (B) represents a value on a solid content basis and is evaluated according to the potentiometric titration method of JIS K 0070-1992.

In the present specification, "(meth)acrylate" means acrylate or methacrylate, and "(meth)acrylic acid" means acrylic acid or methacrylic acid.

The (meth)acrylic acid ester monomer constituting the (meth)acrylic resin (B) for use in the present invention comprises at least one member selected from methyl (meth)acrylate, ethyl (meth)acrylate, cyclohexyl (meth)acrylate, 2-ethylhexyl (meth)acrylate, and an OH group-containing (meth)acrylate. The presence of these monomers enables the formation of a paint film having excellent chemical resistance etc. while maintaining good paint stability even when a modified polyolefin is mixed.

Specific examples of OH group-containing (meth)acrylic acid ester monomers include 2-hydroxyethyl (meth)acrylate, 2-hydroxypropyl (meth)acrylate, 3-hydroxypropyl (meth)acrylate, 4-hydroxybutyl (meth)acrylate, 1,4-cyclohexanedimethanol monoacrylate, polyethylene glycol mono(meth)acrylate, polypropylene glycol mono(meth)acrylate, polybutylene glycol mono(meth)acrylate, polyethylene glycol polypropylene glycol mono(meth)acrylate, and 2-hydroxy-3-phenoxypropyl (meth)acrylate. These may be used alone or in a combination of two or more.

Examples of other (meth)acrylic acid ester monomers constituting the (meth)acrylic resin (B) include acrylic monomers, such as n-propyl (meth)acrylate, iso-propyl (meth)acrylate, n-butyl (meth)acrylate, iso-butyl (meth)acrylate, tert-butyl (meth)acrylate, tert-butylcyclohexyl (meth)acrylate, isobornyl (meth)acrylate, dicyclopentanyl (meth)acrylate, dodecyl (meth)acrylate (i.e., lauryl (meth)acrylate), tridecyl (meth)acrylate, tetradecyl (meth)acrylate, pentadecyl (meth)acrylate, hexadecyl (meth)acrylate, heptadecyl (meth)acrylate, stearyl (meth)acrylate, isostearyl (meth)acrylate, nonadecyl (meth)acrylate, icosyl (meth)acrylate, henicosyl (meth)acrylate, behenyl (meth)acrylate, tricosyl (meth)acrylate, tetracosyl (meth)acrylate, pentacosyl (meth)acrylate, hexacosyl (meth)acrylate, heptacosyl (meth)acrylate, octacosyl (meth)acrylate, nonacosyl (meth)acrylate, triacontyl (meth)acrylate, hentriacontyl (meth)acrylate, dotriacontyl (meth)acrylate, tetratriacontyl (meth)acrylate, and pentatriacontyl (meth)acrylate. The hydrocarbon group may be linear or branched, and may have a cyclic structure. These monomers may be used alone or in a combination of two or more.

The (meth)acrylic resin (B) of the present invention preferably does not contain a polycyclic (meth)acrylate from the viewpoint of achieving good adhesion to different materials other than polyolefins and adhesion to resins used for the overpaint. Examples of polycyclic (meth)acrylates include tetracyclododecyl (meth)acrylate, 2,10-dimethyltetracyclododecyl (meth)acrylate, and 11,12-dimethyltetracyclododecyl (meth)acrylate.

The (meth)acrylic resin (B) of the present invention may further contain a chain transfer agent. Examples of chain transfer agents include, but are not particularly limited to, mercaptans, such as n-dodecyl mercaptan (i.e., lauryl mercaptan), 2-ethylhexyl thioglycolate, 2,4-diphenyl-4-methyl-1-pentene, 2-mercaptoethanol, 2,3-dimethylcapto-1-propanol, and glycidyl mercaptan; allyl compounds, such as allyl acetate, α-methylstyrene dimer, and allyl carbinol; and the like.

The (meth)acrylic resin (B) of the present invention may further contain polymerizable monomers other than those listed above. Examples include styrene monomers, such as styrene, α-methylstyrene, para-methylstyrene, and divinylbenzene. In addition, examples of monomers that can be used in combination other than those listed above include vinyl acetate, and the like. These monomers may be used alone or in a combination of two or more.

The content of the (meth)acrylic resin (B) is preferably 25 parts by mass or more per 100 parts by mass of the acid-modified polyolefin (A). The content of the (meth)acrylic resin (B) is more preferably 50 parts by mass or more, and even more preferably 100 parts by mass or more. When the content of the (meth)acrylic resin (B) is 25 parts by mass or more, the paint has good storage stability. The content of the (meth)acrylic resin (B) is preferably 900 parts by mass or less, more preferably 450 parts by mass or less, and even more preferably 300 parts by mass or less. When the content of the (meth)acrylic resin (B) is 900 parts by mass or less, good adhesion and chemical resistance are attained.

The paint formulation proposed in the present invention may contain an acrylic resin, alkyd resin, urethane resin, and the like insofar as the effect of the present invention is not impaired.

The paint formulation proposed in the present invention preferably does not contain cellulose acetate butyrate (hereinafter "CAB") or a CAB-modified polyolefin obtained by grafting a polyolefin modified product with CAB. "Does not contain" means that the content thereof is 20 parts by mass or less, preferably 10 parts by mass or less, more preferably 3 parts by mass or less, particularly preferably 1 parts by mass, and most preferably 0 parts by mass, based on the modified polyolefin (A) in the paint formulation. These CAB materials do not have good compatibility with modified PO and thus can deteriorate paint stability.

The paint formulation of the present invention may contain a pigment. Examples of pigments for use include color pigments, extender pigments, conductive pigments, and the like.

Examples of color pigments include titanium oxide, carbon black, chrome yellow, ochre, fast yellow, pigment yellow, chrome orange, permanent orange, permanent red, fast violet, methyl violet lake, navy blue, cobalt blue, phthalocyanine blue, pigment green, naphthol green, aluminum paste, and the like. These may be used alone or in a combination of two or more.

Examples of extender pigments include barium sulfate, talc, silica, calcium carbonate, and the like. These may be used alone or in a combination of two or more.

For conductive pigments, any conductive pigment that can impart conductivity to paint films may be used, and the conductive pigment for use may be in any form, such as particles, flakes, and fibers (including whiskers). Examples of conductive pigments include conductive carbon, carbon nanotubes, carbon nanofibers, silver, nickel, copper, graphite, aluminum, antimony-doped tin oxide, phosphorus-doped tin oxide, acicular titanium oxide, antimony oxide, zinc antimonate, indium tin oxide, etc. whose surfaces are coated with tin oxide/antimony, and the like. These may be used alone or in a combination of two or more.

The total amount of the pigment is preferably 50 to 700 parts by mass, and more preferably 75 to 350 parts by mass, per 100 parts by mass of the acid-modified polyolefin (A).

In the present invention, the paint formulation contains a hydrocarbon-based solvent (C), and may further contain at least an ester-based solvent (D1) or a ketone-based solvent (D2), or both. The hydrocarbon-based solvent (C) is preferably contained in an amount of 200 parts by mass or more, more preferably 300 parts by mass or more, and even more preferably 400 parts by mass or more, per 100 parts by mass of the acid-modified polyolefin (A). The amount of the hydrocarbon-based solvent (C) is preferably 3000 parts by mass or less, more preferably 2500 parts by mass or less, and even more preferably 1800 parts by mass or less. When the amount of the hydrocarbon-based solvent (C) is in the above range, excellent paint storage stability can be attained.

Examples of the hydrocarbon-based solvent (C) include aromatic hydrocarbon-based solvents, such as toluene, xylene, and Solvesso (registered trademark) 100; aliphatic hydrocarbon-based solvents, such as hexane and heptane; and alicyclic hydrocarbon-based solvents, such as cyclohexane, cyclohexene, methylcyclohexane, and ethylcyclohexane. One or more of these solvents can be preferably used. Of these, xylene or cyclohexane is preferred. In particular, a combination of xylene, Solvesso (registered trademark) 100, and cyclohexane is preferred.

The total amount of the ester-based solvent (D1) and ketone-based solvent (D2) is preferably 20 parts by mass or more, and more preferably 50 parts by mass or more, per 100 parts by mass of the acid-modified polyolefin (A). The total amount of the ester-based solvent (D1) and ketone-based solvent (D2) is preferably 500 parts by mass or less, more preferably 400 parts by mass or less, and even more preferably 200 parts by mass or less. When the total amount of the ester-based solvent (D1) and ketone-based solvent (D2) is within the above range, excellent paint storage stability can be attained.

Examples of the ester-based solvent (D1) include methyl acetate, ethyl acetate, propyl acetate, isopropyl acetate, butyl acetate, isobutyl acetate, amyl acetate, and the like. Preferred among these is ethyl acetate. Examples of the ketone-based solvent (D2) include acetone, methyl ethyl ketone, methyl isobutyl ketone, and methyl amyl ketone. Preferred among these is methyl ethyl ketone. It is also possible to combine two or more members selected from the ester-based solvents (D1) and the ketone-based solvents (D2).

The paint formulation may further contain an alcohol-based solvent (E). Addition of the alcohol-based solvent (E) can further improve the storage stability of the paint. The amount of the alcohol-based solvent (E) when added is preferably 5 parts by mass or more, and more preferably 10 parts by mass or more, per 100 parts by mass of the acid-modified polyolefin (A). The amount of the alcohol-based solvent (E) is preferably 70 parts by mass or less, and more preferably 50 parts by mass or less. When the amount of the alcohol-based solvent (E) is within the above range, remarkably excellent paint storage stability can be attained. Examples of the alcohol-based solvent (E) include methanol, ethanol, normal propyl alcohol, isopropyl alcohol, normal butanol, isobutanol, 2-butanol, and the like.

Solvent-based paint formulation

The paint formulation of the present invention comprises the acid-modified polyolefin (A) and (meth)acrylic resin (B). The paint formulation of the present invention can be obtained by dilution as needed.

It is preferable that the paint formulation of the present invention is substantially a solvent-based paint formulation. Specifically, the total of the hydrocarbon-based solvent (C), ester-based solvent (D1), ketone-based solvent (D2), and alcohol-based solvent (E) is preferably 90 mass% or more, more preferably 95 mass% or more, and even more preferably 99 mass% or more, when the total amount of the solvents contained in the paint formulation is 100 mass%.

There is no problem when the total of these components is 100 mass%. The paint formulation of the present invention can exhibit excellent water resistance and chemical resistance because it is substantially a solvent-based paint formulation.

The viscosity of the paint formulation when applied is not particularly limited. It is within the range of 10 to 300 mPa·sec, and more preferably within the range of 15 to 200 mPa·sec because good application workability and finish appearance are attained.

The paint formulation of the present invention may contain a curing agent as long as the effect of the present invention is not impaired. The curing agent is preferably a blocked isocyanate or an epoxy-based curing agent. A blocked isocyanate can be formed into a one-component paint formulation by blocking the isocyanate group with a blocking agent, and may be heated and cured when a paint film is formed.

The paint formulation of the present invention is useful as a primer for a polyolefin substrate. The polyolefin substrate is preferably a polypropylene substrate.

Examples

Production Example of Acid-modified Polyolefin (A1)

100 parts by mass of propylene-butene copolymer polymerized with a metallocene catalyst (propylene component: 76 mol% and 1-butene component: 24 mol%), 150 parts by mass of toluene, 4 parts by mass of maleic acid anhydride, and 12 parts by mass of di-tert-butyl peroxide were placed in a 1-L autoclave. The mixture was reacted at 140°C for 3 hours. The reaction mixture was then poured into a container containing a large amount of methyl ethyl ketone, and the resin was precipitated. Subsequently, unreacted substances etc. were removed by centrifugation to obtain an acid-modified propylene-butene copolymer in which maleic acid anhydride was graft-polymerized. After drying under reduced pressure at 60°C for 5 hours, an acid-modified propylene-butene copolymer (acid value: 5 mgKOH/g-resin, weight average molecular weight: 20,000, Tm: 70°C, Tg: -20°C) was obtained. The acid-modified polyolefin produced by this production example was referred to as "A-1."

An acid-modified propylene-butene copolymer (acid value: 5 mgKOH/g-resin, weight average molecular weight: 180,000, Tm: 70°C, Tg: -20°C) was obtained in the same manner as in Production Example 1, except that the amounts of maleic acid anhydride and di-tert-butyl peroxide were respectively changed to 4 parts by mass and 4 parts by mass. The acid-modified polyolefin produced by this production example was referred to as "A-2."

An acid-modified propylene-butene copolymer (acid value: 40 mgKOH/g-resin, weight average molecular weight: 20,000, Tm: 70°C, Tg: -20°C) was obtained in the same manner as in Production Example 1, except that the amounts of maleic acid anhydride and di-tert-butyl peroxide were respectively changed to 40 parts by mass and 12 parts by mass. The acid-modified polyolefin produced by this production example was referred to as "A-3."

An acid-modified propylene-butene copolymer (acid value: 40 mgKOH/g-resin, weight average molecular weight: 180,000, Tm: 70°C, Tg: -20°C) was obtained in the same manner as in Production Example 1, except that the amounts of maleic acid anhydride and di-tert-butyl peroxide were respectively changed to 40 parts by mass and 2 parts by mass. The acid-modified polyolefin produced by this production example was referred to as "A-4."

Production Example of Acid-modified Chlorinated Polyolefin (A-5)

100 parts by mass of propylene-ethylene copolymer, 150 parts by mass of toluene, 10 parts by mass of maleic acid anhydride, and 5 parts by mass of di-tert-butyl peroxide were placed in a 1-L autoclave equipped with a stirrer. The mixture was heated to 140°C, and then stirred for 3 hours. After cooling the resulting reaction mixture, the reaction mixture was poured into a container containing a large amount of methyl ethyl ketone, and the resin was precipitated.

Subsequently, unreacted substances etc. were removed by centrifugation to obtain an acid-modified propylene-ethylene copolymer in which maleic acid anhydride was graft-polymerized. After drying at 70°C under reduced pressure for 5 hours, a maleic acid anhydride-modified propylene-ethylene copolymer was obtained. Next, 100 parts by mass of maleic acid anhydride-modified propylene-ethylene copolymer and 1700 parts by mass of chloroform were placed in a 2-L glass-lined reaction vessel, and the reaction vessel was sealed. The liquid in the reaction vessel was heated while stirring and dispersing to achieve dissolution at an internal temperature of the vessel of 120°C for 1 hour. After the internal temperature of the vessel was cooled to 110°C, 0.5 parts by mass of t-butylperoxy-2-ethylhexanoate was added, and 70 parts by mass of chlorine was introduced. The internal temperature of the vessel was cooled to 60°C, and 1400 parts by mass of chloroform was distilled off. Thereafter, drying was performed to obtain a maleic acid anhydride-modified chlorinated propylene-ethylene copolymer (A-5, acid value: 15 mgKOH/g-resin, chlorine content: 20 mass%, weight average molecular weight: 90,000, Tg: 5°C).

Preparation Example of Modified Polyolefin Solution

100 parts by mass of A-1, 280 parts by mass of cyclohexane, and 120 parts by mass of xylene were placed in a 1000-mL four-necked flask equipped with a water-cooled reflux condenser and a stirrer. The mixture was heated to 70°C while stirring, and stirring was continued for 1 hour to thereby obtain an A-1 solution.

In the same manner as for the A-1 solution, A-2 to A-5 solutions were obtained by dissolving A-2 to A-5.

100 parts by mass of modified polyolefin (a copolymer of ethylene, ethyl acrylate, and maleic acid anhydride, acid value: 15 mgKOH/g-resin, weight average molecular weight: 100,000, Tm: 60°C, Tg: -40°C), 280 parts by mass of cyclohexane, and 120 parts by mass of xylene were placed in a 1000-ml four-necked flask equipped with a water-cooled reflux condenser and a stirrer. The mixture was heated to 70°C while stirring, and stirring was continued for 1 hour to thereby obtain an A-6 solution.

Analytical measurement and evaluation of the thus-obtained acid-modified polyolefins were performed in the following manner.

Measurement of Acid Value of Acid-modified Polyolefin (A)

The acid value (mgKOH/g-resin) of the acid-modified polyolefin (A) in the present invention is a value calculated by FT-IR (produced by Shimadzu Corporation, FT-IR8200PC) from the following formula using coefficient (f) obtained from a calibration curve prepared with a chloroform solution of maleic acid anhydride (produced by Tokyo Chemical Industry Co., Ltd.), and absorbance (I) of the elastic peak (1780 cm$^{-1}$) of a carbonyl (C=O) bond of succinic anhydride in an acid-modified polyolefin solution.

$$\text{Acid value (mgKOH/g-resin)} = [\text{absorbance (I)} \times \text{(f)} \times 2 \times \text{molecular weight of potassium hydroxide} \times 1000 \text{ (mg)}/\text{molecular weight of succinic anhydride}]$$

Molecular weight of succinic anhydride: 100.07
Molecular weight of potassium hydroxide: 56.11

Measurement of Weight Average Molecular Weight (Mw) of Acid-modified Polyolefin (A)

The weight average molecular weight of the acid-modified polyolefin (A) in the present invention is a value measured by an Alliance e2695 gel permeation chromatograph (hereinafter "GPC"; standard substance: polystyrene resin, mobile phase: tetrahydrofuran, column: Shodex KF-806 + KF-803, column temperature: 40°C, flow rate: 1.0 mL/min, detector: photodiode array detector (wavelength 254 nm = ultraviolet light)) produced by Nihon Waters K.K.

Measurement of Tm and Tg of Acid-modified Polyolefin (A)

In the present invention, Tm and Tg values can be measured by DSC in accordance with JIS K7121-2012, for example, under the following conditions. Specifically, Tm and Tg values were obtained by using a DSC measurement apparatus (produced by Seiko Instruments, Inc.) in the following manner. About 5 mg of a sample was heated at 150°C for 10 minutes and kept in a molten state. The sample was then cooled at a rate of 10°C/min and held stable at -50°C. Thereafter, the sample was heated to 150°C at 10°C/min to thus obtain the Tm and Tg values. The Tg here refers to a midpoint glass transition temperature.

The chlorine content of the acid-modified chlorinated polyolefin was measured by titration in accordance with JIS K-7229-1995.

(Meth)acrylic Resin (B)

First, a mixture consisting of 15.8 parts by mass of methyl methacrylate (MMA), 23.7 parts by mass of cyclohexyl methacrylate (CHMA), 0.46 parts by mass of 2-hydroxyethyl methacrylate (HEMA), 1.2 parts by mass of α-methylstyrene dimer, 1.8 parts by mass of Perbutyl O as an polymerization initiator, and 14.6 parts by mass of butyl acetate as a solvent was prepared.

Next, 45.4 parts by mass of butyl acetate was placed in a 500-ml four-necked flask equipped with a water-cooled reflux condenser and a stirrer, and the flask was thoroughly degassed with nitrogen gas. The internal temperature was then increased to 90°C. Subsequently, the prepared mixture was added dropwise from a dropping funnel over a period of 3 hours to allow polymerization to occur. After completion of the dropwise addition, heating and aging were performed for 5 hours, thereby obtaining a (meth)acrylic resin B-1 (hydroxy value: 5.0 mgKOH/g, acid value: 0 mgKOH/g, Tg: 80°C) with a solid content of 40 mass%.

(Meth)acrylic resins B-2 to B-9 were obtained in the same manner, except that the (meth)acrylic acid ester monomer was changed as shown in Table 1. In the table, EHMA represents ethylhexyl methacrylate, and MAA represents methacrylic acid.

Table 1

| | B-1 | B-2 | B-3 | B-4 | B-5 | B-6 | B-7 | B-8 | B-9 |
|---|---|---|---|---|---|---|---|---|---|
| (Meth)acrylic acid ester monomer | | | | | | | | | |
| EHMA | | | | | 33.2 | | | | 39.5 |
| HEMA | 0.46 | 9.28 | 0.46 | 9.28 | 4.64 | 0.46 | 0 | 14 | 0.46 |
| MAA | 0 | 0 | 1.84 | 1.84 | 0 | 3.2 | 1.84 | 0 | 0 |
| MMA | 15.8 | 15.8 | 15.8 | 15.8 | 0.08 | 11.8 | 11.8 | 11.8 | 0 |
| CHMA | 23.7 | 14.9 | 21.9 | 13.1 | 2.08 | 24.5 | 26.4 | 14.2 | 0 |
| (Meth)acrylic resin (B) | | | | | | | | | |
| Calculated value | | | | | | | | | |
| Polymer Tg (°C) | 80 | 78 | 86 | 83 | 0 | 86 | 82 | 72 | -9 |
| Acid value (mgKOH/g) | 0.0 | 0.0 | 30.0 | 30.0 | 0.0 | 52.1 | 30.0 | 0.0 | 0.0 |
| Hydroxy value (mgKOH/g) | 5.0 | 100.0 | 5.0 | 100.0 | 50.0 | 5.0 | 0.0 | 150.9 | 5.0 |

Paint Formulation

The paint formulation shown in Example 1 was produced in the following manner. 40 parts by mass of xylene and a pigment having the mass ratio shown in Table 1 were added to 500 parts by mass of the A-1 solution (A-1, 100 parts by mass), and the mixture was dispersed using a bead mill until the size evaluated by a grindometer became 10 µm or less, thus obtaining a pigment dispersion. The B-1 solution was added to the pigment dispersion (A-1, 100 parts by mass) in a manner such that the amount of the (meth)acrylic resin (B-1) was 100 parts by mass. Subsequently, the mixture was mixed with 110 parts by mass of cyclohexane, 50 parts by mass of methyl ethyl ketone, and other solvents shown in the table, thus obtaining the paint formulation shown in Example 1.

Paint formulations shown in Examples 2 to 11 were obtained in the same manner as in Example 1, except that the resin compositions and solvents were mixed in the proportions shown in the table. The ester-based solvent (D1), ketone-based solvent (D2), and alcohol-based solvent (E) were added to a pigment dispersion.

Paint formulations shown in Comparative Examples 1 to 5 were obtained in the same manner as in Example 1, except that the resin compositions and solvents were mixed in the proportions shown in the table. The ester-based solvent (D1), ketone-based solvent (D2), and alcohol-based solvent (E) were added to a pigment dispersion.

Paint Stability

The paint stability of the paint formulations produced in the Examples and Comparative Examples was evaluated for the following items. Tables 2 and 3 show the results.

Table 2

| | | | Ex.1 | Ex.2 | Ex.3 | Ex.4 | Ex.5 | Ex.6 | Ex.7 | Ex.8 | Ex.9 | Ex. 10 | Ex.11 |
|---|---|---|---|---|---|---|---|---|---|---|---|---|---|
| Solvent-based paint formulation | Modified polyolefin (A) | A-1 | 100 | | | | | | | | | | |
| | | A-2 | | 100 | | | | | | | | | |
| | | A-3 | | | 100 | | | | | | | | |
| | | A-4 | | | | 100 | | | | | | | |
| | | A-5 | | | | | 100 | 100 | 100 | 100 | 100 | 100 | 100 |
| | (Meth)acrylic resin (B) | B-1 | 100 | 100 | 100 | 100 | 100 | | | | | 25 | 900 |
| | | B-2 | | | | | | 100 | | | | | |
| | | B-3 | | | | | | | 100 | | | | |
| | | B-4 | | | | | | | | 100 | | | |
| | | B-5 | | | | | | | | | 100 | | |
| | Hydrocarbon-based solvent (C) | Xylene | 160 | 160 | 160 | 160 | 160 | 160 | 160 | 160 | 160 | 100 | 400 |
| | | Cyclohexane | 390 | 390 | 390 | 390 | 390 | 390 | 390 | 390 | 390 | 280 | 1100 |
| | Ketone-based solvent (D2) | Methyl ethyl ketone | 50 | 50 | 50 | 50 | 50 | 25 | 25 | | 50 | 30 | 50 |
| | | Methyl isobutyl ketone | | | | | | | 25 | 25 | | | |
| | | Methyl amyl ketone | | | | | | 25 | | 10 | | | 50 |
| | Ester-based solvent (D1) | Butyl acetate | 150 | 150 | 150 | 150 | 150 | 150 | 150 | 150 | 150 | 37.5 | 1350 |
| | Alcohol-based solvent (E) | Isopropyl alcohol | | | | | | | | 15 | | | |
| | Pigment | Titanium oxide | 100 | 100 | 100 | 100 | 100 | 100 | 100 | 100 | 100 | 60 | 500 |
| | | Carbon black | 5 | 5 | 5 | 5 | 5 | 5 | 5 | 5 | 5 | 5 | 30 |
| | | Barium sulfate | 20 | 20 | 20 | 20 | 20 | 20 | 20 | 20 | 20 | 15 | 100 |
| | | Talc | 7.5 | 7.5 | 7.5 | 7.5 | 7.5 | 7.5 | 7.5 | 7.5 | 7.5 | 5 | 40 |

| | | | Ex.1 | Ex.2 | Ex.3 | Ex.4 | Ex.5 | Ex.6 | Ex.7 | Ex.8 | Ex.9 | Ex. 10 | Ex.11 |
|---|---|---|---|---|---|---|---|---|---|---|---|---|---|
| Evaluation result | Paint film evaluation | Initial adhesion | A | A | A | A | A | A | A | A | A | A | A |
| | | Water resistance | A | A | A | A | A | A | A | A | A | A | A |
| | | Gasohol resistance | A | A | A | A | B | B | A | A | A | A | B |
| | | High-pressure washing resistance | B | A | B | A | B | A | B | A | B | A | B |
| | Paint stability | -5°C | A | A | A | B | A | A | A | A | A | B | B |
| | | 50°C | A | B | A | B | A | A | A | A | A | B | B |

Table 3

| | | | Comp. Ex. 1 | Comp. Ex. 2 | Comp. Ex. 3 | Comp. Ex. 4 | Comp. Ex. 5 |
|---|---|---|---|---|---|---|---|
| Solvent-based paint formulation | Modified polyolefin (A) | A-5 | 100 | 100 | 100 | 100 | |
| | | A-6 | | | | | 100 |
| | (Meth)acrylic resin (B) | B-1 | | | | | 100 |
| | | B-6 | 100 | | | | |
| | | B-7 | | 100 | | | |
| | | B-8 | | | 100 | | |
| | | B-9 | | | | 100 | |
| | Hydrocarbon-based solvent (C) | Xylene | 160 | 160 | 160 | 160 | 160 |
| | | Cyclohexane | 390 | 390 | 390 | 390 | 390 |
| | Ketone-based solvent (D2) | Methyl ethyl ketone | 50 | 50 | 50 | 50 | 35 |
| | Ester-based solvent (D1) | Butyl acetate | 150 | 150 | 150 | 150 | 150 |
| | Alcohol-based solvent (E) | Isopropyl alcohol | | | | | 15 |
| | Pigment | Titanium oxide | 100 | 100 | 100 | 100 | 100 |
| | | Carbon black | 5 | 5 | 5 | 5 | 5 |
| | | Barium sulfate | 20 | 20 | 20 | 20 | 20 |
| | | Talc | 7.5 | 7.5 | 7.5 | 7.5 | 7.5 |
| Evaluation result | Paint film evaluation | Initial adhesion | B | B | A | B | D |
| | | Water resistance | B | B | A | C | C |
| | | Gasohol resistance | C | C | A | C | C |
| | | High-pressure washing resistance | D | D | A | D | D |
| | Paint stability | -5°C | D | B | B | D | D |
| | | 50°C | D | B | D | D | D |

The viscosity (flow time) of the paint formulations produced in the Examples and Comparative Examples was measured by a Ford cup. The paint formulations were allowed to stand at -5°C and 50°C for 10 days to evaluate the appearance and viscosity of each paint formulation. The viscosity was measured by a Ford cup (No. 4, 25°C) .

Evaluation criteria:

A: No seeding or gelation occurred. Increase in flow time (thickening) was 5 seconds or less, compared with before being left for 10 days.
B: No seeding or gelation occurred. Thickening occurred in more than 5 seconds to 10 seconds.
C: No seeding or gelation occurred. More than 10 seconds were required for thickening.

D: Seeding and gelation occurred. Additionally, more than 10 seconds were required for thickening.

Production of Test Piece

100 parts by mass of a paint formulation obtained in the Example or Comparative Example, 30 parts by mass of xylene, and 30 parts by mass of toluene were mixed to adjust the paint formulation to be a solvent composition for application. Hereinbelow, the adjusted paint formulations are referred to as diluted paint formulations.

A polypropylene substrate (10 cm × 10 cm) was degreased with isopropyl alcohol to make a test sheet. The diluted paint formulation produced as above was applied by spraying to the test sheet to a dry film thickness of 10 μm. As a colored base paint, Retan (registered trademark) PG white (tradename, produced by Kansai Paint Co., Ltd.) was applied by spraying to the diluted paint formulation side of the test sheet to a dry film thickness of 50 μm. Heating was then performed in an oven at 80°C for 30 minutes, thereby obtaining a test piece including a laminated paint film. Various paint film performance tests described below were performed on the test piece.

Paint Film Performance Test

Test pieces produced as above were evaluated for the following items. Tables 2 and 3 show the results.

(1) Initial Adhesion

Cross-cuts reaching the substrate of each test piece were made using a cutter knife to form a grid of 100 squares (1 mm × 1 mm). Adhesive cellophane tape was applied to the surface of the grid portion, and the tape was peeled off rapidly at 20°C. Then, the number of squares of the paint film remaining was checked.

Evaluation criteria:

A: 100 squares remained.
B: 99 to 90 squares remained.
C: 89 to 41 squares remained.
D: The number of squares remaining was 40 or less.

(2) Water Resistance

After each test piece was immersed in hot water at 40°C for 10 days, the surface of the paint film was observed. Evaluation criteria:

A: No appearance change, and the surface of the paint film was remarkably excellent.
B: Almost no appearance change, and the surface of the paint film was excellent.
C: The paint film swelled. Abnormalities, such as blistering, were confirmed.

(3) Gasohol resistance (Chemical Resistance)

Each test piece was immersed in a test solution having a weight ratio of gasoline/ethanol = 90/10 at 20°C, and the coating surface conditions such as blistering and peeling after 120 minutes were observed and evaluated according to the following criteria.

Evaluation criteria:

A: No abnormalities.
B: Blistering with a diameter of less than 3 mm and/or peeling with a diameter of less than 3 mm occurred.
C: Blistering with a diameter of 3 mm or more and/or peeling with a diameter of 3 mm or more occurred.

(4) High-pressure Washing Resistance Test

Each test piece (10 cm × 10 cm) was subjected to pretreatment by making cross-cuts reaching the substrate on the test surface of each test piece using a cutter knife. The test piece was set such that the distance between the test piece and the injection port was 10 cm, such that the angle was 90°C, and such that the injected water would hit the portion at which the cuts were made in the pretreatment. Then, hot water at a water temperature of 80°C and water pressure of 80 bar was continuously injected for 1 minute. The state of the paint film after injection was observed and evaluated according to the following criteria.

A: No peeling occurred at all.
B: Peeling of less than 10% of the paint film occurred relative to the area of the test piece.
C: Peeling of 10 to less than 50% of the paint film occurred relative to the area of the test piece.
D: Peeling of 50% or more of the paint film occurred relative to the area of the test piece.

**Claims**

1. A paint formulation comprising

    a modified polyolefin (A) having a glass transition temperature of -30°C or more and
    a (meth)acrylic resin (B) having a glass transition temperature of 0°C or more, and having a hydroxy value of 5 to 100 mgKOH/g or an acid value of 0 to 30 mgKOH/g,

    wherein a (meth)acrylic acid ester monomer constituting the (meth)acrylic resin comprises at least one member selected from methyl (meth)acrylate, ethyl (meth)acrylate, cyclohexyl (meth)acrylate, 2-ethylhexyl (meth)acrylate, and an OH group-containing (meth)acrylate.

2. The paint formulation according to claim 1, wherein the (meth)acrylic resin (B) is present in an amount of 25 to 900 parts by mass per 100 parts by mass of the modified polyolefin (A) .

3. The paint formulation according to claim 1 or 2,
   wherein the modified polyolefin (A) has an acid value of 5 to 40 mgKOH/g-resin.

4. The paint formulation according to any one of claims 1 to 3, wherein the modified polyolefin (A) has a weight average molecular weight of 20,000 to 180,000.

5. The paint formulation according to any one of claims 1 to 4, comprising a hydrocarbon-based solvent (C), wherein the hydrocarbon-based solvent (C) is present in an amount of 200 to 3000 parts by mass per 100 parts by mass of the modified polyolefin (A).

6. The paint formulation according to any one of claims 1 to 5, comprising at least an ester-based solvent (D1) or a ketone-based solvent (D2), or both.

7. The paint formulation according to any one of claims 1 to 6, further comprising an alcohol-based solvent (E).

8. A primer paint for a polyolefin substrate, comprising the paint formulation of any one of claims 1 to 7.

## INTERNATIONAL SEARCH REPORT

| International application No. |
| --- |
| **PCT/JP2021/032542** |

### A. CLASSIFICATION OF SUBJECT MATTER

*C09D 5/00*(2006.01)i; *C09D 123/26*(2006.01)i; *C09D 133/06*(2006.01)i; *C09D 133/14*(2006.01)i; *C09D 7/20*(2018.01)i
FI:    C09D123/26; C09D133/06; C09D7/20; C09D5/00 D; C09D133/14

According to International Patent Classification (IPC) or to both national classification and IPC

### B. FIELDS SEARCHED

Minimum documentation searched (classification system followed by classification symbols)

C09D1/00-10/00; C09D101/00-201/10; B05D1/00-7/26

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2000-176365 A (NIPPON PAINT CO LTD) 27 June 2000 (2000-06-27) claims 1-2, 5, paragraphs [0001], [0004], [0023], [0027]-[0035], [0051], examples 12, 14-15 | 1-6, 8 |
| A | | 7 |
| X | JP 2007-182527 A (HONDA MOTOR CO LTD) 19 July 2007 (2007-07-19) claim 1, paragraphs [0034], [0038], examples 1-13 | 1-2, 4-7 |
| A | | 8 |
| X | JP 2007-224136 A (FUJIKURA KASEI CO LTD) 06 September 2007 (2007-09-06) claim 1, paragraph [0001], comparative example 7 | 1-2, 6, 8 |
| A | | 3-5, 7 |
| A | JP 2020-55185 A (JUJO PAPER CO LTD) 09 April 2020 (2020-04-09) claims 1-7, paragraphs [0024]-[0059], examples 1-7 | 1-8 |
| A | JP 2018-178043 A (NATOKO KK) 15 November 2018 (2018-11-15) claims 1-2, paragraphs [0001], [0004], [0008]-[0016], [0023], examples 1-21 | 1-8 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 November 2021** | **16 November 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2021/032542**

**C.    DOCUMENTS CONSIDERED TO BE RELEVANT**

| Category* | Citation of document, with indication, where appropriate, of the relevant passages | Relevant to claim No. |
|---|---|---|
| A | JP 2019-167390 A (KANSAI PAINT CO LTD) 03 October 2019 (2019-10-03)<br>claims 1, 6, paragraphs [0009], [0015]-[0041], [0102]-[0103], examples 1-16 | 1-8 |
| A | JP 2000-239602 A (TOYOTA AUTO BODY CO LTD) 05 September 2000 (2000-09-05)<br>claims 1-4, paragraphs [0013]-[0020], [0030], [0032]-[0052] | 1-8 |
| A | JP 9-95643 A (MAZDA MOTOR CORP) 08 April 1997 (1997-04-08)<br>claims 1-5, paragraphs [0001], [0005], [0007]-[0050], examples 1-50 | 1-8 |

Form PCT/ISA/210 (second sheet) (January 2015)

**INTERNATIONAL SEARCH REPORT**
Information on patent family members

International application No.

**PCT/JP2021/032542**

| Patent document cited in search report | | | Publication date (day/month/year) | Patent family member(s) | Publication date (day/month/year) |
|---|---|---|---|---|---|
| JP | 2000-176365 | A | 27 June 2000 | (Family: none) | |
| JP | 2007-182527 | A | 19 July 2007 | US 2007/0129485 A1 claim 1, paragraphs [0068], [0076], examples 1-13 | |
| JP | 2007-224136 | A | 06 September 2007 | (Family: none) | |
| JP | 2020-55185 | A | 09 April 2020 | (Family: none) | |
| JP | 2018-178043 | A | 15 November 2018 | (Family: none) | |
| JP | 2019-167390 | A | 03 October 2019 | (Family: none) | |
| JP | 2000-239602 | A | 05 September 2000 | (Family: none) | |
| JP | 9-95643 | A | 08 April 1997 | US 5955545 A claims 1-3, column 1, lines 6-11, column 2, lines 34-39, column 4, line 28 to column 20, line 12, examples 1-50 KR 10-1997-0006433 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6528064 B

- JP 2002332448 A

**Non-patent literature cited in the description**

- Acrylic ester catalog. Mitsubishi Chemical Corporation

- **KYOSO KITAOKA.** Shin kobunshi bunko 7, toryo you gousei jushi nyuumon [New Polymer 7, Introduction to Synthetic Resins for Paints. Polymer Publication Society, 1997, 168-169